# EUROPEAN PATENT APPLICATION

(11) **EP 3 782 450 A1**
(43) Date of publication of application: **24.02.2021**
(21) Application number: 19788128.7
(22) Date of filing: 13.03.2019
(51) Int. Cl.: A01C 15/06

(54) **FERTILISER MACHINE FOR A GROVE OF TREES**

(30) Priority: 20.04.2018 ES 201830568 U
(71) Applicant: Julio Gil Agueda e Hijos, S.A., 28814 Daganzo (Madrid) (ES)
(72) Inventor: GIL CASTRO, Julio, 28814 Daganzo (Madrid) (ES); RODRIGUEZ RUIZ, Adrián, 28814 Daganzo (Murcia) (ES)
(74) Representative: Temiño Ceniceros, Ignacio
(86) International application number: PCT/ES2019/070169
(87) International publication number: WO 2019/202186

(57) **Abstract**

Fertiliser machine for trees, which can be dragged or suspended, and which is coupled to tractor machines, comprising a frame whereon a hopper is fixed wherein the fertiliser that will then be applied to the crop is deposited; at least one grooved dispenser, with dispensing proportional to the advance and with variable opening for adjusting the dispensing; control devices located between the transmission of the machine and the dispensers; at least one cuvette which enables the fertiliser to be pneumatically incorporated by means of the Venturi effect into an air stream; at least two tubes on both sides of the machine which transfer the fertiliser to outlet nozzles which project the fertiliser in the application site; wherein these tubes are supported by arms which are articulated and horizontally or vertically foldable; and ultrasonic sensors equipped with a millimetric scale.

## Description

### Field of the invention

The present invention relates to a fertiliser machine for trees, especially aimed at performing fertilising tasks in fruit plantings with planting distances in any arrangement with a minimum distance of 4 m between lines, and wherein the machine has localisation means for adjusting the area where said trees should be fertilised.

The field of the invention relates to devices and machines used in agricultural activities, specifically apparatuses for planting, sowing or fertilising, more specifically in machines intended for fertilising land, and specifically machines for fertilising land with fruit trees.

### State of the art

It is known that the task of fertilising in fruit plantings is performed, and has been performed for a long time, manually in wide planting distances or with the aid of simple mechanical means, such as those disclosed in document ES2100111 wherein a type of forklift that can be used for these jobs is described. These forms of fertilising have low yields and further require a high labour cost; therefore, currently they are only used for certain types of plantings where machinery cannot access.

An improvement over this type of fertilising system lies in the use of machinery. The use of fertilisers in open fields with machines is known such as the one disclosed in document EP2695508, wherein the problems of planting bands are not considered. The use of centrifugal fertilisers for this type of open fields is also known, for example, as disclosed in document ES2527975, wherein the planting bands are not taken into account, and narrow bands even less so. These machines are related to machines that distribute the fertiliser with dispensing systems by means of belts or augers, for which reason the fertiliser is distributed in a localised manner, without there being a precision adjustment in the dispensing and therefore having low real yields.

In this sense, the existence of centrifugal fertiliser spreaders in narrow planting bands is known, such as the one disclosed in the document ES0184446U, but they have the problem that in distances where the canopies of the trees are widely separated, the continuation of the fertiliser distribution has many problems, and there are many losses and most of the fertiliser is not absorbed by the crop. These machines also have the problem that the distribution system thereof is by means of belts or augers, therefore, the problem that the dispensing is not exact.

Taking into account the existing background in the state of the art, and the problems that fertilising presents in wide planting distances or in young plantings, the machine of the present invention has a series of mechanisms for adjusting to all planting distances, which were once very wide and little by little are becoming narrower. It has localisation means that enable the fertiliser tasks to be adjusted to the areas where they are specifically needed, being able to adjust to any planting with a distance between lines greater than 4 m. Likewise, it has means for ensuring the correct dispensing of the fertiliser, with which the yields with respect to the manual performance are quintupled and the yields with respect to any type of machinery indicated previously are doubled. Furthermore, it enables the fertiliser area to be localised, minimising the losses generated in this task and therefore reducing the contamination of aquifers.

### Description of the invention

The invention consists of a localising fertiliser machine that is specially designed to perform precise fertilising in fruit plantings with different planting distances since it has a continuous adjustment of the wings. This enables a higher yield, high versatility for use in different crops, as well as greater efficiency in the distribution of the fertiliser, in addition to greater exploitation thereof.

This machine is able to be coupled to both the rear three-point hitch and the front three-point hitch, the standard three-point hitch having to be modified. Furthermore, in the working position it can be dragged, if the transmission is mechanical, electrical or hydraulic; or suspended in the case of installing an electric or hydraulic transmission system. This invention therefore offers high versatility when used.

To perform said task, the machine has a conical hopper with at least one volumetric dispenser with a variable flow rate and dispensing proportional to the advance by means of mechanical, electrical or hydraulic transmission.

The distribution system is pneumatic, one or more high-flow turbines providing the air stream and directed by flexible tubing to the outlet point. At the outlet point, it has a nozzle system operated manually or electrically/hydraulically in order to localise the fertiliser under the entire extension of the base or in strips with different widths.

The manner of localising the fertiliser area under the tree crown has two adjustments, one in each direction of the plane. To do so, in the direction parallel to the planting line, the fertilising strip is adjusted longitudinally by means of ultrasonic sensors or manually, depending on the needs of the client. The ultrasonic sensors enable the presence of the tree to be detected and enable the front and rear offset to the crown thereof to be adjusted. Moreover, in order to adjust the localisation of the fertilised area in the perpendicular direction, it is adjusted hydraulically, electrically or mechanically, by means of an articulated mechanism which enables the width of the machine to be modified. Furthermore, the adjustment of the width of the fertiliser band can be made by means of two possible adjustments:
- the first consists of modifying the outlet angle of the fertiliser. This adjustment can be performed manually or by means of electric or hydraulic actuators, and this enables the width of the band to be regulated. In the same manner, an electronic system can be implemented which enables the entire base of the tree to be fertilised by modifying the outlet angle at the beginning, in the middle and at the end of the crown. In this manner, a circular band would be generated with the centre in the trunk of the tree;
- the second type of adjustment modifies the angle of the deflectors of the end nozzle, and this adjustment manages to precisely adjust the width of the band of fertiliser.

In order for this to be possible, the machine object of the present invention has a frame which enables all the parts and mechanisms of the machine to be supported, and can be coupled, as seen previously, in both the rear and front three-point hitch. The machine may have wheels or it may be suspended.

A hopper and a horizontally- or vertically-folded articulated mechanism is coupled on the frame to support the flexible tubing of the distribution system. The hopper has a conical shape in order to enable the fertiliser to fall into the volumetric dispenser or dispensers. In the lower portion, the special volumetric dispenser/s is/are supported in order to deal with corrosive products. These dispensers can vary the dispensing manually, electrically or hydraulically in order to be perfectly adjusted to the needs of the crop, and therefore, unlike existing machines, the dispensing that was particularly studied for the specific case can be performed.

The supporting mechanism of the distribution system enables it to be perfectly adjusted to the different planting distances with total comfort and speed. The folding of the mechanism is performed by means of hydraulic, electrical or mechanical actuators. This mechanism enables the outlet nozzles to continuously be in the same position with respect to the tree, the folding being able to be horizontal or vertical.

The dispensing of the fertiliser is proportional to the advance of the machine in order to be able to perform said dispensing suitably and homogeneously throughout the crop. To do so, the transmission system can be mechanical by means of a drive wheel or electric/hydraulic by means of a GPS signal. If the system is mechanical, it needs devices for managing the dispensing system according to the signals from the ultrasonic sensors installed in the machine itself, and which were previously indicated for the localisation tasks or by means of another type of signal which is actuated manually.

As mentioned previously, the distribution system of the equipment is pneumatic and the air stream is provided by at least one high-flow turbine. These turbines are actuated hydraulically by hydrostatic motors or mechanically by the power take-off. After the turbine generates the air stream, fertiliser is incorporated by means of the dispenser/s and they are transferred to the outlet nozzle by means of the flexible tubing, and wherein the nozzles can have orientators in order to more specifically localise the fertiliser and they are able to be oriented in different manners already described above.

Finally, the means for localising the fertiliser area are performed by means of two adjustments. The adjustment in the parallel direction of the planting, in other words, in the advance direction, which is performed manually or by means of the ultrasonic sensors described above, which enable the presence of a tree to be detected and millimetrically regulated and perfectly adjusting the offsets in the localisation of the fertiliser under the crown; and moreover, the adjustment in the direction perpendicular to the advance which is performed with the opening or closing of the support mechanism of the distribution system and the orientation of each outlet nozzle.

In order to complete the description and to help a better understanding of the features of the invention, a set of figures and drawings is presented wherein the following is represented by way of illustration and not limitation:
Fig. 1 is a free perspective drawing of the central portion of the fertiliser machine of the present invention.
Fig. 2 is a drawing of a bottom view of the central portion of the machine.
Fig. 3 is a drawing of a right side view of the central portion of the machine.
Fig. 4 is a perspective drawing of the calibration assembly of the ultrasonic sensor.
Fig. 5 is a free perspective drawing of the fertiliser machine of the present invention.
Fig. 5A. is an enlarged detail of figure 5 wherein the outlet point is seen.
Fig. 5B. is an enlarged detail of figure 5 wherein the possible locations of the ultrasonic sensors are seen.
Fig. 6 is a plan view of the assembly of the machine as fully closed, in other words, with the arms folded.
Fig. 7 is a plan view of the assembly of the machine as partially open, in other words, with the arms unfolded.
Fig. 8 is a plan view of the fertilising shape in straight bands.
Fig. 9 is a plan view of the fertilising shape in bands in the shape of a circular ring.
Fig. 10 is a drawing of a rear view of the assembly of the partially open machine.
Fig. 10A is a detail of the central portion of the machine.
Fig. 11 is a detailed representation of the end nozzle with deflectors.

### Detailed description of the figures

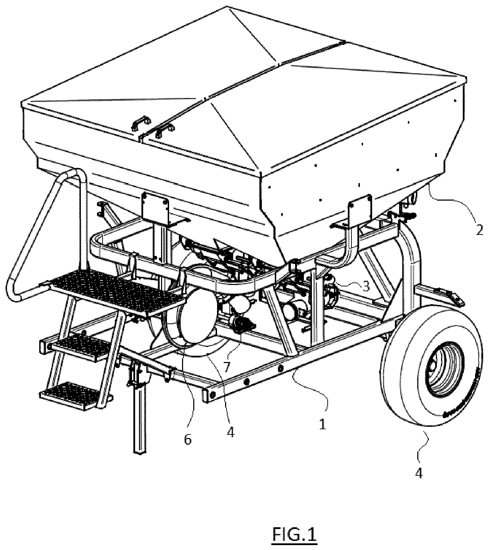

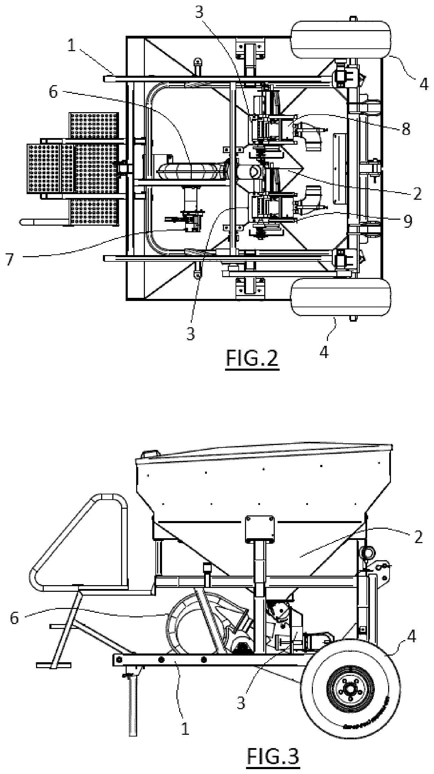

Figures 1 to 11 show a preferred embodiment of the fertiliser machine for trees of the present invention, wherein the machine has wheels (4) and therefore is not suspended.

As seen in Figures 1-3, the central portion of the machine comprises a frame (1) whereon a hopper (2) is fastened with at least one outlet in the lower portion thereof. The fertiliser is deposited in this hopper, which will then be applied to the tree (A) or to any crop in a line. One or more grooved dispensers (3) with variable opening are coupled to the outlet or outlets of the hopper in order to be able to perform a dispensing adjusted to the needs of the crop, this opening can be performed manually, electrically or hydraulically. These dispensers (3) are especially designed to deal with corrosive products such as the fertiliser. The rotation thereof is activated mechanically by means of a wheel (4), or by means of an electric or hydraulic motor. If this is done mechanically, it occurs proportionally to the advance because if the tractor advances at a higher speed, the rate of rotation of the wheel (4) will be proportional to this. If an electric or hydraulic motor is installed, it is controlled by means of a GPS signal in order to capture the advance speed.

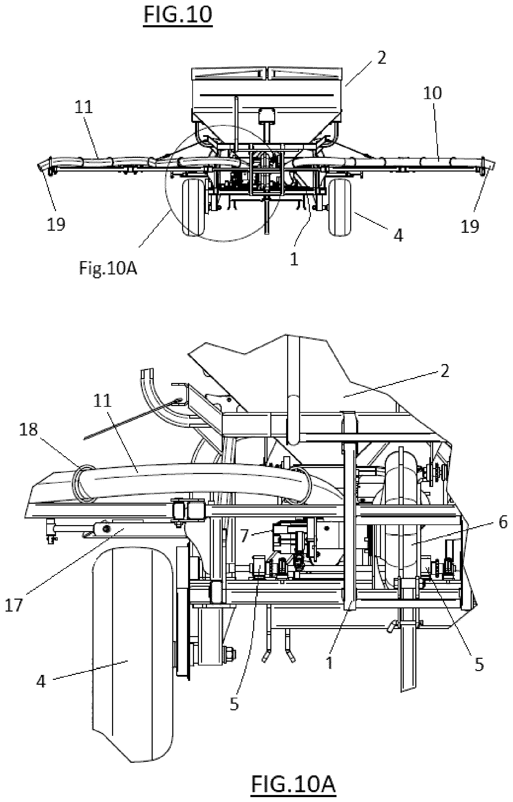

Figure 10A shows that devices (5) are inserted between the transmission of the machine and the dispensers (3), which can be electrical, hydraulic or mechanical, in order to be able to stop or activate the movement of the distributors, with the aim of being able to dispense the desired fertiliser both in the desired amount and place.

Once the dispensing of the fertiliser has been defined, the distribution thereof is then defined, which is a pneumatic distribution system. To transfer the fertiliser from the hopper (2) to the desired place under the tree, an air stream generated by one or more high-flow turbines (6) is used. This turbine is actuated by means of a hydraulic motor (7) or by means of the power take-off of the tractor. Once the air stream has been generated, it is passed through one or more cuvettes (8,9) which cause a Venturi effect in order to incorporate the fertiliser into the air stream. The number of cuvettes depends on the number of dispensers installed. From each cuvette (8,9), two tubes (10,11) with a large cross section emerge in order to transfer the fertiliser to the desired application site. These tubes (10,11) are supported by corresponding lateral arms (100, 101), which are articulated arms that can be unfolded, and therefore the width thereof can be continuously adjusted and, with them, the total width of the machine.

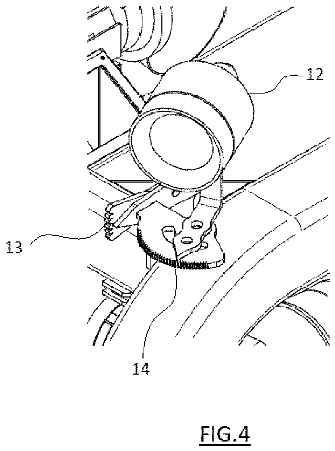

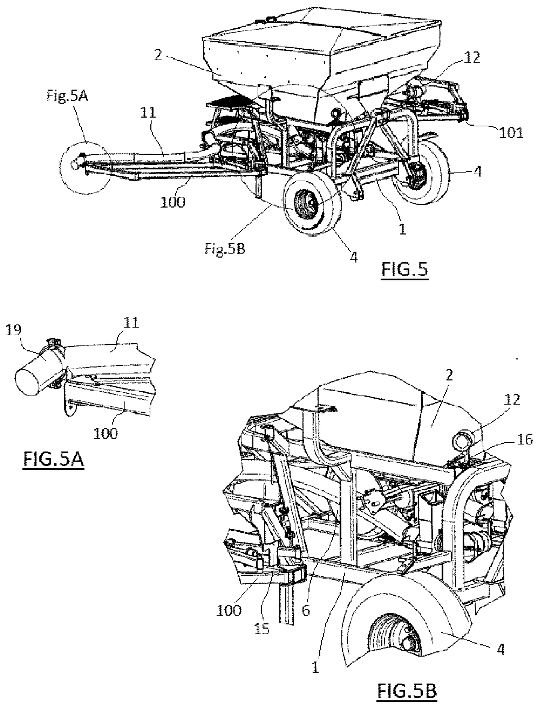

The devices (5), if they are electrical, can be connected to manual switches or to ultrasonic sensors (12). If ultrasonic sensors (12) are installed, these are connected to the devices (5) by means of a computer located in the cabin of the tractor (T) which enables certain programming parameters to be changed in order to perfectly adjust the localisation of the fertiliser. These ultrasonic sensors (12) are equipped with a millimetric scale that enables the position thereof to be adjusted to a high level of detail. This improvement is made in order to be able to adjust the machine in the field in the shortest time and with the greatest precision possible. The regulation consists of a vertical scale (13) and a horizontal scale (14), as seen in Figure 4. The sensors (12) can be located in two places depending on the type of planting. For example, as seen in Figure 5B, for plantings less than 4 years old the assembly would preferably be located at a lower point closer to the tree (15); while for older plantings the assembly is located on the frame at the raised point (16).

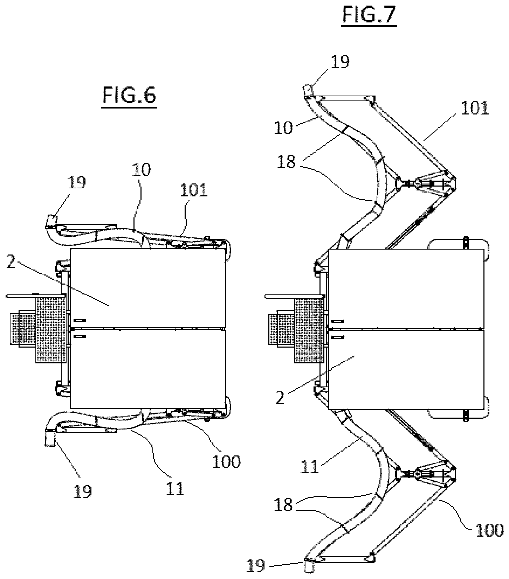

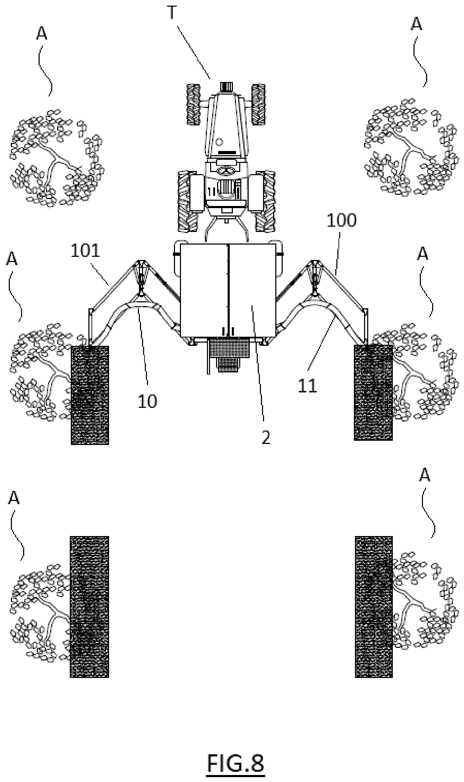

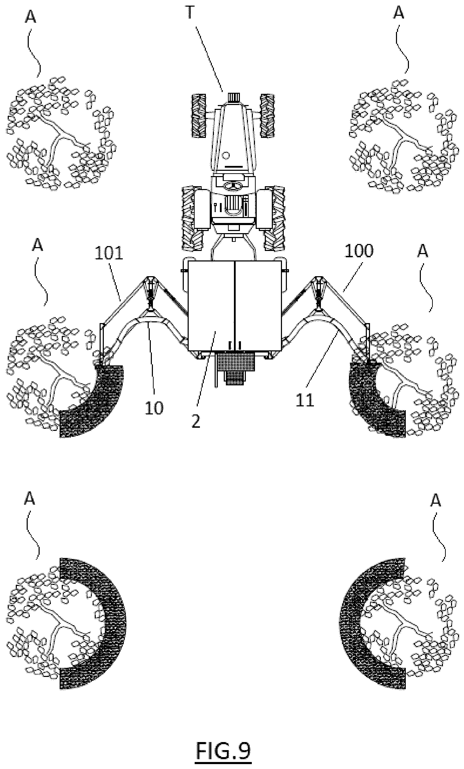

As previously mentioned, the machine has two arms (100, 101) made up of an articulated double-parallelogram mechanism, as seen in Figures 6 and 7, which by means of hydraulic or electrical actuators (17) the machine can be continuously adjusted for different planting distances. Figure 6 shows the machine completely closed in order to be transported on the road. Figure 7 shows the machine partially open. This mechanism acts as a support for the distribution system by means of the guides (18) homogeneously distributed throughout the mechanism. The mechanism can be folded horizontally or vertically. The present invention enables, as seen in Figures 8 and 9, fertilising in straight bands and bands in the shape of a circular ring, for which reason the arms can regulate the position and length thereof, adapting to the position of the trees (A), and the fertiliser being thrown by a tractor or tractor machine (T). If fertilising in the shape of a circular crown is desired, sensors and actuators will be installed in order to control the orientation of the nozzle (19). The sensors will be in connection with a processor module, preferably a microprocessor, which is also in direct connection with the controls of the cabin of the tractor, which give the positioning signal to the actuators as it advances along the crown in order to thus be able to localise the fertiliser as described in Figure 9.

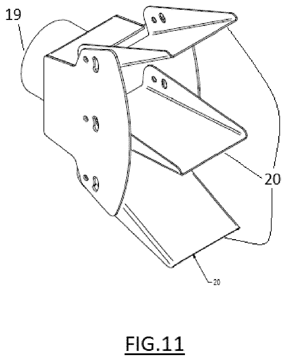

The parallelogram-shaped design enables a nozzle (19) to be maintained in the same position of the outlet flange, and/or as in an alternative embodiment of the invention, as seen in Figure 11, each outlet nozzle (19) can have a plurality of deflectors (20) in any opening position of the structure which enable the width of the band of fertiliser to be adjusted with sufficient precision. Moreover, it should be noted that the outlet flange enables a manual orientation, and optionally a hydraulic or electrical orientation, in order to adjust the width of the band of fertiliser to be applied.

## Claims

1. A fertiliser machine for trees, which can be dragged or suspended, is coupled to both the rear three-point hitch and the front three-point hitch of a tractor machine (T), comprising a frame (1) whereon a hopper (2) is fastened with at least one outlet in the lower portion thereof, wherein the fertiliser is deposited in said hopper (2) which will then be applied to the tree (A) or to any type of crop in a line, which is **characterised in that** it additionally comprises:
- at least one grooved dispenser (3), with dispensing proportional to the advance and with variable opening for adjusting the dispensing located at the outlet of the hopper (2);
- control devices (5) located between the transmission of the machine and the dispensers (3);
- at least one cuvette (8,9), which is in connection with the dispensers, and which enables the fertiliser to be pneumatically incorporated by means of the Venturi effect into an air stream, having at least one high-flow turbine (6) actuated by a motor (7) or by the power take-off of the tractor which generates said air stream;
- at least two tubes (10,11) on both sides of the machine which transfer the fertiliser to outlet nozzles (19) which project the fertiliser in the application site; wherein these tubes (10, 11) are supported by corresponding lateral arms (100, 101) fastened to both sides of the frame (1); and wherein the arms (100, 101) are articulated and horizontally or vertically foldable, which continuously adjust to the different distances and arrangements of the planting; and
- ultrasonic sensors (12) equipped with a millimetric scale, connected to the control devices (5) of the dispensers; and wherein the ultrasonic sensors (12) consist of a vertical scale (13) and another horizontal scale (14) for millimetric adjustment.

2. The fertiliser machine for trees, according to claim 1, **characterised in that** the ultrasonic sensors (12) are located at a high point (16) of the frame (1).

3. The fertiliser machine for trees, according to claim 1, **characterised in that** the ultrasonic sensors (12) are located at a lower point (15) of the frame (1).

4. The fertiliser machine for trees, according to claim 1, **characterised in that** the tubes (10, 11) of the distribution system are fastened to the arms (100, 101) by means of the guides (18) homogeneously distributed throughout the mechanism.

5. The fertiliser machine for trees, according to claim 1, **characterised in that** each outlet nozzle (19) has a plurality of deflectors (20).

6. The fertiliser machine for trees, according to claim 1, **characterised in that** the advance speed of the machine is controlled by means of a GPS signal and the dispensing is proportional to the advance.

7. The fertiliser machine for trees, according to claim 1, **characterised in that** the adjustment of the nozzle (19) for circular bands is performed by means of electronic equipment which varies the angle of the outlet nozzle as the machine advances.
